# EUROPEAN PATENT APPLICATION

(11) **EP 4 696 879 A1**
(43) Date of publication of application: **18.02.2026**
(21) Application number: 25195364.2
(22) Date of filing: 12.08.2025
(51) Int. Cl.: F02M 37/00, F16K 1/32, F16K 1/36, F16K 1/42, F16K 27/02

(54) **FUEL TANK ISOLATION VALVE**

(30) Priority: 13.08.2024 CN 202411106020
(71) Applicant: Stant USA Corp., Connersville, IN 47331 (US)
(72) Inventor: LIU, Jian, Suzhou city Jiangsu Province 215000 (CN); JIN, Zhi-Cheng, Suzhou city Jiangsu Province 215000 (CN); ZHOU, Biao, Suzhou city Jiangsu Province 215000 (CN); SHEN, Chong, Suzhou city Jiangsu Province 215000 (CN); HE, Rong-Fei, Suzhou city Jiangsu Province 215000 (CN)
(74) Representative: Gille Hrabal Partnerschaftsgesellschaft mbB Patentanwälte

(57) **Abstract**

The present invention relates to the field of automotive valves, specifically to a fuel tank isolation valve. It comprises: an isolation valve body, wherein a valve chamber is formed within the isolation valve body, and a partition plate is disposed within the valve chamber; an electromagnetic valve mounted upon the isolation valve body, said electromagnetic valve including a movable iron core extending into the valve chamber, with a plug head formed at the front end of the movable iron core, said plug head facing the partition plate; with a first spring abutting the movable iron core's side remote from the partition plate. It further comprises: a temporary power-off pressure relief device, which includes a limiting seat, a sliding seat, and a conversion mechanism. The sliding seat is positioned at the front end of the solenoid valve body, while the limiting seat is mounted on the movable iron core. The limiting seat and sliding seat respectively feature axially opposed locking protrusions and flanges. The conversion mechanism serves to transform the axial driving force exerted by the movable iron core upon the limiting seat into a unidirectional rotational force driving the limiting seat circumferentially. A first slide groove is provided on one side of the protruding flange to accommodate axial sliding of the locking protrusion. This arrangement enables the temporary power failure pressure relief function.

## Description

### Field of the Invention

The present invention relates to the field of automotive valves, and in particular to a fuel tank isolation valve.

### Background of the Invention

For the fuel-vapor system, in order to cooperate with and meet various engine operating conditions, a fuel tank isolation valve can maintain and regulate the pressure within the fuel tank and its associated pipelines, and control the flow rate during fuel tank pressure relief so that it does not exceed a preset value.

However, during the production of motor vehicles, after the fuel tank and the fuel tank isolation valve are assembled on the assembly line but before the vehicle is powered on, fuel is prefilled into the fuel tank for subsequent testing and startup. At this time, since the system is unpowered, the existing fuel tank isolation valve remains in a normally closed state, preventing the fuel tank from venting to the atmosphere. During refueling, air inside the tank cannot be discharged quickly, which affects refueling efficiency and, consequently, the vehicle assembly efficiency. Therefore, it is necessary to design a fuel tank isolation valve capable of achieving temporary power-off pressure relief.

### Summary of the Invention

To overcome the shortcomings of the prior art described above, the present invention provides a fuel tank isolation valve capable of achieving the funtion of temporary power-off pressure relief.

In order to achieve the above purpose, the present invention is realized by adpoting the following technical solutions:
a fuel tank isolation valve, comprising:
an isolation valve main body, which is provided with a valve cavity inside, a partition is arranged in the valve cavity, and a through hole is provided on the partition for communicating flow passages on both sides of the partition;
a solenoid valve, which is mounted on the isolation valve main body, the solenoid valve comprises a movable iron core extending into the valve cavity, a plug is provided at a front end of the movable iron core, the plug is directly opposite to the partition, and a first spring is in contact with a side of the movable iron core away from the partition;
the fuel tank isolation valve has a pressure-holding state, in which the solenoid valve is powered off and the first spring pushes the movable iron core forward until the plug blocks the through hole;
the fuel tank isolation valve has a first pressure relief state, in which the solenoid valve is powered on and the movable iron core retracts in a direction away from the partition until the through hole is opened;
the fuel tank isolation valve further comprises:
   a temporary power-off pressure relief device, which comprises a limiting seat, a sliding seat and a conversion device, the sliding seat is arranged at the front end of a valve body of the solenoid valve, and the limiting seat is arranged on the movable iron core;
   the fuel tank isolation valve has a second pressure relief state, in which the solenoid valve is powered off and the first spring pushes the movable iron core forward until the limiting seat and the sliding seat axially contact each other so as to limit the plug from blocking the through hole; correspondingly, the limiting seat and the sliding seat are respectively provided with a locking protrusion and a protruding flange that are axially opposite to each other;
   the conversion device is configured to convert an axial driving force of the movable iron core acting on the limiting seat into a circumferential unidirectional rotation of the limiting seat; a first sliding groove is provided on one side of the protruding flange for accommodating axial sliding of the locking protrusion; and the fuel tank isolation valve further comprises a rotation blocking structure, which is configured to restrict the limiting seat from continuing rotating in the circumferential direction after the locking protrusion rotates into the first sliding groove.

Further, in one embodiment of the fuel tank isolation valve of the present application, the conversion device comprises a circumferentially locked driving portion, the driving portion is arranged on one axial side of the limiting seat, a driving tooth is provided on the side of the driving portion adjacent to the limiting seat, a transmission tooth is provided on the limit seating opposite to the driving tooth, and a guiding inclined surface is provided between the driving tooth and the transmission tooth; and
after the solenoid valve is powered on, the movable iron core axially presses the limiting seat and the driving portion until the driving tooth is axially pressed against the transmission tooth, and at this time, the guiding inclined surface is configured to drive the transmission tooth to rotate in the circumferential direction. As a preferred embodiment of the present application, the wedge-shaped engagement between the driving tooth and the transmission tooth enables an axial force output by the movable iron core to be converted into a rotational driving force.

Preferably, in one embodiment of the fuel tank isolation valve of the present application, the driving portion is a pressure plate, the pressure plate is arranged on the side of the limiting seat adjacent to the plug, the pressure plate is arranged on the movable iron core, the driving tooth is arranged on the pressure plate, the transmission tooth is provided on the limiting seat opposite to the driving tooth, the limiting seat is slidably sleeved on the movable iron core, and a limiting supporting portion is provided on the side of the limiting seat away from the plug; and
after the solenoid valve is powered on, the movable iron core axially pushes the pressure plate until the driving tooth is axially pressed against the transmission tooth, thereby driving the transmission tooth to rotate in the circumferential direction, and at this time, the limiting supporting portion is configured to support the limiting seat.

Further, in one embodiment of the fuel tank isolation valve of the present application, a circumferential locking structure is provided between the pressure plate and the sliding seat, the circumferential locking structure comprises a positioning protrusion extending on an outer side of the pressure plate and a second sliding groove arranged on an inner side of the sliding seat and extending axially, and the positioning protrusion is slidably arranged within the second sliding groove.

Further, in one embodiment of the fuel tank isolation valve of the present application, the pressure plate is slidably sleeved on the movable iron core, and the movable iron core is provided with a pressing surface corresponding to an upper end of the pressure plate. As a preferred embodiment of the present application, the pressure plate is axially driven to move through the pressing surface.

Preferably, in one embodiment of the fuel tank isolation valve of the present application, the driving portion is fixedly arranged on the side of the limiting seat away from the plug; and after the solenoid valve is powered on, the movable iron core axially pushes the limiting seat until the transmission tooth is axially pressed against the driving tooth. As a preferred embodiment of the present application, based on the above structure, the driving portion can be integrated into the front end of the valve body of the solenoid valve or the bottom of the sliding seat, eliminating the need to manufacture the pressure plate and thereby saving production costs.

Further, in one embodiment of the fuel tank isolation valve of the present application, the limiting seat is in the form of a plate body and is sleeved on the movable iron core, and a limiting boss for driving the limiting seat to move axially is provided on the movable iron core corresponding to the limiting seat. As a preferred embodiment of the present application, a separately manufactured limiting seat is advantageous for reducing manufacturing difficulty.

Further, in one embodiment of the fuel tank isolation valve of the present application, a first mounting groove is provided on the limiting seat, the first mounting groove extending radially from a central hole of the limiting seat corresponding to the movable iron core to an outer edge of the limiting seat, the sliding seat is provided with a receiving cavity for accommodating rotation of the limiting seat inside, and the receiving cavity is configured to restrict radial movement of the limiting seat. As a preferred embodiment of the present application, it facilitates the insertion of the limiting seat from the side of the movable iron core.

Further, in one embodiment of the fuel tank isolation valve of the present application, at least one pair of inclined teeth is provided on the protruding flange at the side adjacent to the locking protrusion, a positioning slot is provided between adjacent inclined teeth, and when the fuel tank isolation valve is in the second pressure relief state, the locking protrusion resists on the positioning slot; and
in a unidirectional rotation direction of the limiting seat, a tooth surface of the inclined teeth adjacent to the first sliding groove is inclined along the circumferential direction, and the tooth surface of the inclined teeth away from the first sliding groove is perpendicular to the circumferential direction. As a preferred embodiment of the present application, when the solenoid valve is powered off, the movable iron core moves toward the partition under the force of the first spring, and the inclined teeth and positioning slot are configured to restrict the limiting seat from rotating in the reverse direction during this process.

Further, in one embodiment of the fuel tank isolation valve of the present application, a mounting groove is provided on the protruding flange, the mounting groove extends axially outward through the protruding flange, and the mounting groove is adapted to the locking protrusion; and in the unidirectional rotation direction of the limiting seat, the mounting groove is arranged on the side of the protruding flange away from the first sliding groove. The mounting groove is configured to accommodate the locking protrusion into the sliding seat during axial insertion of the limiting seat. The mounting groove is provided to facilitate the insertion of the limiting seat into the sliding seat when the solenoid valve is powered off. In the initial state, the locking protrusion is positioned within the mounting groove, at this time the limiting seat and the sliding seat are axially unlocked, and the fuel tank isolation valve is in the pressure-holding state. After the solenoid valve is powered on, the limiting seat is pushed until the locking protrusion moves axially inward out of the mounting groove, and due to the action of the conversion device, after the locking protrusion exits the mounting groove, the limiting seat rotates circumferentially, causing the locking protrusion to be offset from the mounting groove, and after the solenoid valve is powered off the next time, the locking protrusion cannot enter the mounting groove, and at this time, the isolation valve is in the second pressure relief state.

From the above technical solutions, it can be seen that the present invention has the following advantageous effects:
1. The present invention provides a fuel tank isolation valve, the principle of which is as follows: after the fuel tank isolation valve is in the second pressure relief state, the solenoid valve is subsequently subjected to at least one cycle of power-on and power-off, causing the locking protrusion to rotate into the first sliding groove, at this time, the limiting seat and the sliding seat are axially unlocked. After the limiting seat and the sliding seat are axially unlocked, the temporary power-off pressure relief device becomes inactive. With continued power-on and power-off cycles of the solenoid valve, the fuel tank isolation valve alternates continuously between the first pressure relief state and the pressure-holding state. Thus, the temporary power-off pressure relief function can be achieved.
2. The present invention provides a fuel tank isolation valve, which can automatically enter the second pressure relief state after completing a airtightness test in the pressure-holding state merely through controlling the power-on and power-off of the solenoid valve, which has the advantages of simple operation and a high degree of automation.

### Brief Description of the Drawings

Fig. 1 is a schematic diagram of a fuel tank isolation valve in the embodiment of the present application;
Fig. 2 is a cross-sectional view of a fuel tank isolation valve in Embodiment 2 of the present application;
Fig. 3 is a partial enlarged view of region A in Fig. 2;
Fig. 4 is a cross-sectional view of a temporary power-off pressure relief device in Embodiment 2 of the present application;
Fig. 5 is an exploded view of components of a temporary power-off pressure relief device in Embodiment 2 of the present application;
Fig. 6 is an enlarged view of a sliding seat in Fig. 5;
Fig. 7 is a structural diagram of a sliding seat in Embodiment 2 of the present application;
Fig. 8 is a structural diagram of a pressure plate in Embodiment 2 of the present application;
Fig. 9 is a positional schematic diagram between a limiting seat and a sliding seat in Embodiment 2 of the present application, showing a locking protrusion positioned in a mounting groove;
Fig. 10 is a positional schematic diagram between a limiting seat and a sliding seat in Embodiment 2 of the present application, showing a locking protrusion resisting on a positioning slot;
Fig. 11 is a positional schematic diagram between a limiting seat and a sliding seat in Embodiment 2 of the present application, showing a locking protrusion positioned in a first sliding groove;
Fig. 12 is a cross-sectional view of a fuel tank isolation valve in Embodiment 3 of the present application;
Fig. 13 is a partial enlarged view of region B in Fig. 12;
Fig. 14 is a positional schematic diagram between a limiting seat and a sliding seat in Embodiment 3 of the present application, showing a locking protrusion positioned in a mounting groove;
Fig. 15 is a positional schematic diagram between a limiting seat and a sliding seat in Embodiment 3 of the present application, showing a locking protrusion resisting on a positioning slot;
Fig. 16 is a positional schematic diagram between a limiting seat and a sliding seat in Embodiment 3 of the present application, showing a locking protrusion positioned in a first sliding groove;
Fig. 17 is an exploded view of components of a temporary power-off pressure relief device in Embodiment 3 of the present application from a first perspective;
Fig. 18 is an exploded view of components of a temporary power-off pressure relief device in Embodiment 3 of the present application from a second perspective.

In the figures:
1-isolation valve main body; 10-valve cavity; 101-partition; 1011-through hole; 1012-pressure relief hole;
2-solenoid valve; 21-movable iron core; 210-pressure relief flow passage; 211-plug; 212-pressing surface; 213-limiting boss; 22-the first spring;
3-temporary power-off pressure relief device; 31-limiting seat; 310-the first mounting groove; 311-locking protrusion; 312-transmission tooth; 32-sliding seat; 320-receiving cavity; 321-protruding flange; 3210-positioning slot; 3211-inclined tooth; 322-the first sliding groove; 3220-side wall; 323-the second sliding groove; 324-mounting groove; 33-pressure plate; 330-the second mounting groove; 331-driving tooth; 332-positioning protrusion; 341-guiding inclined surface; 35-elastic member;
4-pressure relief valve plug; 41-the second spring.

### Detailed Description of the Embodiments

### Embodiment 1

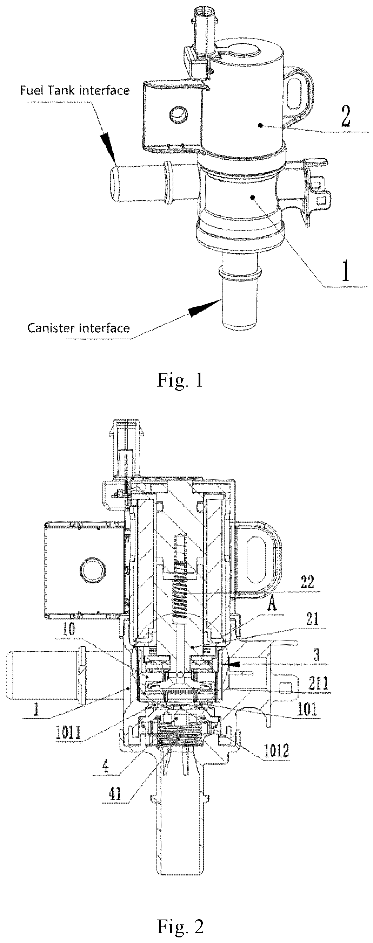

As shown in Figs. 1 to 3 and Figs. 12 to 13, the present embodiment provides a fuel tank isolation valve, which comprises:
an isolation valve main body 1, which is provided with a valve cavity 10 inside, a partition 101 is arranged in the valve cavity 10, and a through hole 1011 is provided on the partition 101 for communicating flow passages on both sides of the partition 101;
a solenoid valve 2, which is mounted on the isolation valve main body 1, the selonoid valve 2 comprises a movable iron core 21 extending into the valve cavity 10, a plug 211 is provided at a front end of the movable iron core 21, the plug 211 is directly opposite to the partition 101, and a first spring 22 is in contact with a side of the movable iron core 21 away from the partition 101;
the fuel tank isolation valve has a pressure-holding state, in which the solenoid valve 2 is powered off and the first spring 22 pushes the movable iron core 21 forward until the plug 211 blocks the through hole 1011; and
the fuel tank isolation valve has a pressure-holding state, in which the solenoid valve 2 is powered on and the movable iron core 21 retracts in a direction away from the partition 101 until the through hole 1011 is opened.

In this embodiment, a pressure relief flow passage 210 is provided through the movable iron core 21, the pressure relief flow passage 210 extends out of the center of the plug 211, and a pressure relief hole 1012 is provided on the partition 101 corresponding to the pressure relief flow passage 210, a pressure relief valve plug 4 is provided on the side of the partition 101 away from the movable iron core 21, and the pressure relief valve plug 4 elastically resists on the side of the pressure relief hole 1012 away from the movable iron core 21 through the second spring 41. The through hole 1011 is arranged outside the pressure relief hole 1012, and the front end of the plug 211 is annular and corresponds to the through hole 1011. In an automobile fuel tank system, the flow passage in the valve cavity 10 on the side of the partition 101 corresponding to the movable iron core 21 is connected to the fuel tank, and the flow passage in the valve cavity 10 on the side of the partition 101 corresponding to the pressure relief valve plug 4 is connected to a canister.

### Embodiment 2

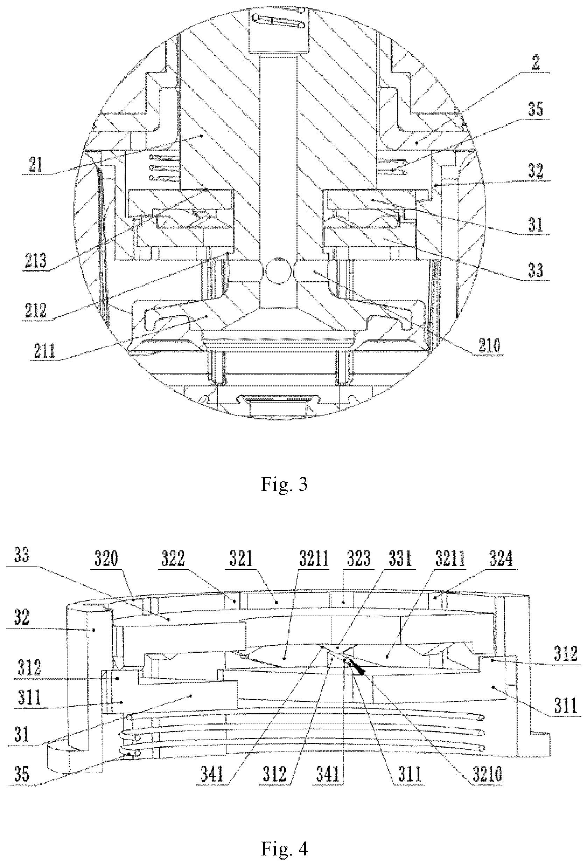

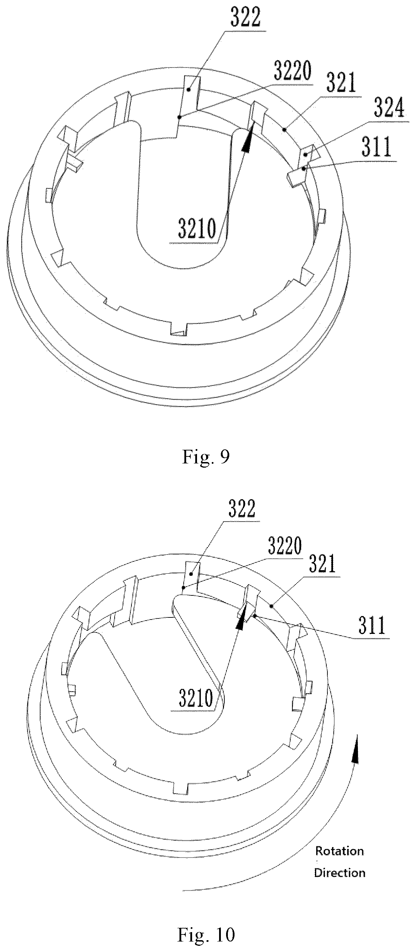

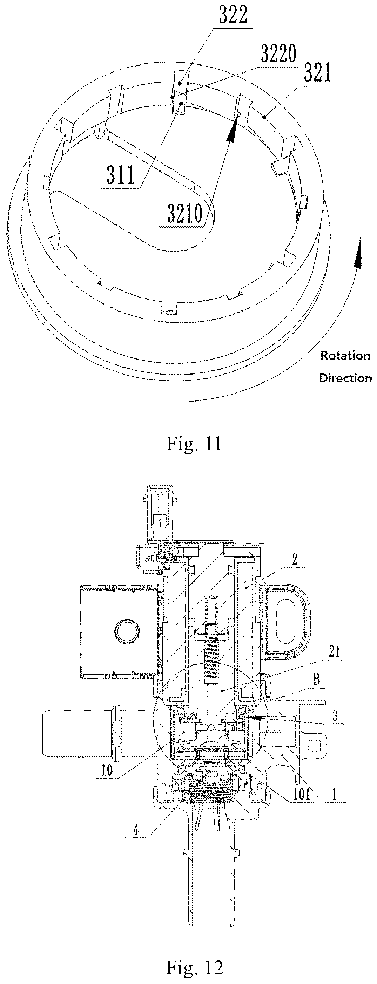

On the basis of Embodiment 1, and as shown in Figs. 3 to 5, the fuel tank isolation valve further comprises:
a temporary power-off pressure relief device 3, which comprises a limiting seat 31, a sliding seat 32 and a conversion device, the sliding seat 32 is arranged at the front end of a valve body of the solenoid valve 2, and the limiting seat 31 is arranged on the movable iron core 21;
the fuel tank isolation valve has a second pressure relief state, in which the solenoid valve 2 is powered off and the first spring 22 pushes the movable iron core 21 forward until the limiting seat 31 and the sliding seat 32 axially contact each other so as to limit the plug 211 from blocking the through hole 1011; correspondingly, as shown in Fig. 10, the limiting seat 31 and the sliding seat 32 are respectively provided with a locking protrusion 311 and a protruding flange 321 that are axially opposite to each other;
the conversion device is configured to convert an axial driving force of the movable iron core 21 acting on the limiting seat 31 into a circumferential unidirectional rotation of the limiting seat 31 (the process of the unidirectional rotation is shown in Figs. 10 to 11); as shown in Fig. 11, a first sliding groove 322 is provided on one side of the protruding flange 321 for accommodating axial sliding of the locking protrusion 311; and the fuel tank isolation valve further comprises a rotation blocking structure, which is configured to restrict the limiting seat 31 from continuing rotating in the circumferential direction after the locking protrusion 311 rotates into the first sliding groove 322.

In this embodiment, corresponding to the rotation blocking structure, a side wall 3220 is provided on the first sliding groove 322 to restrict the limiting seat 31 from continuing rotating in the circumferential direction. Specifically, the side wall 3220 extends from the protruding flange 321 in the direction away from the plug 211.

Based on the above structure, the principle of the fuel tank isolation valve is as follows: after the fuel tank isolation valve is in the second pressure relief state, the solenoid valve 2 is subsequently subjected to at least one cycle of power-on and power-off, causing the locking protrusion 311 to rotate into the first sliding groove 322. At this time, the limiting seat 31 and the sliding seat 32 are axially unlocked. After the limiting seat 31 and the sliding seat 32 are axially unlocked, the temporary power-off pressure relief device 3 becomes inactive. With continued cycles of power-on and power-off the solenoid valve 2, the fuel tank isolation valve alternates continuously between the first pressure relief state and the pressure-holding state, thereby achieving the temporary power-off pressure relief function. Specifically, in this embodiment, after the fuel tank isolation valve is in the second pressure relief state, the solenoid valve 2 is powered on and off for one cycle, causing the locking protrusion 311 to enter the first sliding groove 322.

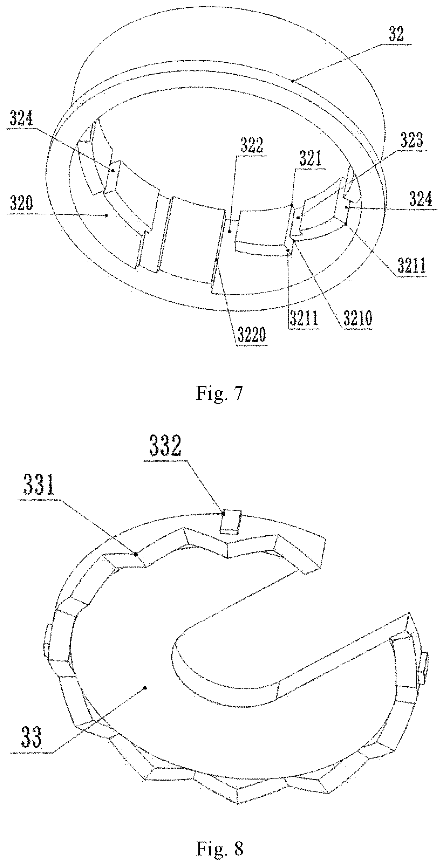

As shown in Figs. 4 to 11, in this embodiment, the conversion device comprises a circumferentially locked driving portion. The driving portion is arranged on one axial side of the limiting seat 31, and a driving tooth 331 is provided on the side of the driving portion adjacent to the limiting seat 31. Opposite the driving tooth 331, a transmission tooth 312 is provided on the limiting seat 31, and a guiding inclined surface 341 is provided between the driving tooth 331 and the transmission tooth 312. After the solenoid valve 2 is powered on, the movable iron core 21 axially presses the limiting seat 31 and the driving portion until the driving tooth 331 is axially pressed against the transmission tooth 312. At this time, the guiding inclined surface 341 is configured to drive the transmission tooth 312 to rotate in the circumferential direction. Through the wedge-shaped engagement between the driving tooth 331 and the transmission tooth 312, the axial force output by the movable iron core 21 can be converted into rotational driving force.

In this embodiment, the limiting seat 31 is in the form of a plate body and is sleeved on the movable iron core 21. As shown in Fig. 3, a limiting boss 213 for driving the limiting seat 31 to move axially is provided on the movable iron core 21 corresponding to the limiting seat 31. The separately manufactured limiting seat 31 is advantageous for reducing manufacturing difficulty.

In this embodiment, a first mounting groove 310 is provided on the limiting seat 31, the first mounting groove 310 extending radially from the central hole of the limiting seat 31 corresponding to the movable iron core 21 to the outer edge of the limiting seat 31. The sliding seat 32 is provided with a receiving cavity 320 for accommodating the rotation of the limiting seat 31 inside, and the receiving cavity 320 is configured to restrict radial movement of the limiting seat 31, so as to facilitate the insertion of the limiting seat 31 from the side of the movable iron core 21.

In this embodiment, the driving portion is a pressure plate 33, which is arranged on the side of the limiting seat 31 adjacent to the plug 211 and arranged on the movable iron core 21, the driving tooth 331 is arranged on the pressure plate 33, the transmission tooth 312 is provided on the limiting seat 31 opposite to the driving tooth 331, the limiting seat 31 is slidably sleeved on the movable iron core 21, and a limiting supporting portion is provided on the side of the limiting seat 31 away from the plug 211; and
as shown in Figs. 3 to 5, after the solenoid valve 2 is powered on, the movable iron core 21 axially pushes the pressure plate 33 until the driving tooth 331 is axially pressed against the transmission tooth 312, thereby driving the transmission tooth 312 to rotate in the circumferential direction, and at this time, the limiting supporting portion is configured to support the limiting seat 31.

In this embodiment, the limiting supporting portion is an elastic member 35, which provides a buffering and noise-reducing effect. Specifically, the elastic member 35 is a compression spring, capable of reducing friction during rotation of the limiting seat 31. In this embodiment, the transmission tooth 312 is provided on the axial end surface of the locking protrusion 311. In this embodiment, five locking protrusions 311 are provided and arranged at intervals in the circumferential direction, and a plurality of driving teeth 331 are arranged in the circumferential direction.

In this embodiment, a circumferential locking structure is provided between the pressure plate 33 and the sliding seat 32, the circumferential locking structure comprises a positioning protrusion 332 extending on the outer side of the pressure plate 33 and a second sliding groove 323 arranged on the inner side of the sliding seat 32 and extending axially, and the positioning protrusion 332 is slidably arranged within the second sliding groove 323. Specifically, four positioning protrusions 332 are provided and are arranged at intervals in the circumferential direction.

In other embodiments, the circumferential locking structure can also be provided between the pressure plate 33 and the movable iron core 21. When the pressure plate 33 is fixed on the movable iron core 21, the circumferential locking structure can be provided between the movable iron core 21 and the sliding cavity of the solenoid valve 2 corresponding to the movable iron core 21. In this embodiment, the pressure plate 33 is slidably sleeved on the movable iron core 21, and the movable iron core 21 is provided with a pressing surface 212 corresponding to the upper end of the pressure plate 33. The pressure plate 33 is axially driven to move through the pressing surface 212.

Specifically, a second mounting groove 330, similar to the first mounting groove 310, is provided on the pressure plate 33, and the receiving cavity 320 is also configured to restrict radial movement of the pressure plate 33.

In this embodiment, at least one pair of inclined teeth 3211 is provided on the protruding flange 321 at the side adjacent to the locking protrusion 311, and a positioning slot 3210 is provided between adjacent inclined teeth 3211. When the fuel tank isolation valve is in the second pressure relief state, the locking protrusion 311 resists on the positioning slot 3210.

In the unidirectional rotation direction of the limiting seat 31, the tooth surface of the inclined teeth 3211 adjacent to the first sliding groove 322 is inclined along the circumferential direction, and the tooth surface of the inclined teeth 3211 away from the first sliding groove 322 is perpendicular to the circumferential direction. When the solenoid valve 2 is powered off, the movable iron core 21 moves toward the partition 101 under the force of the first spring 22, the inclined teeth 3211 and the positioning slot 3210 are configured to restrict the limiting seat 31 from rotating in the reverse direction during this process. Specifically, an inclined surface corresponding to the inclined tooth surface of the inclined teeth 3211 is provided on the locking protrusion 311 (the inclined surface is the guiding inclined surface 341 on the transmission tooth 312). In this embodiment, the inclined tooth surface of the inclined teeth 3211 on the side adjacent to the first sliding groove 322 extends into the first sliding groove 322.

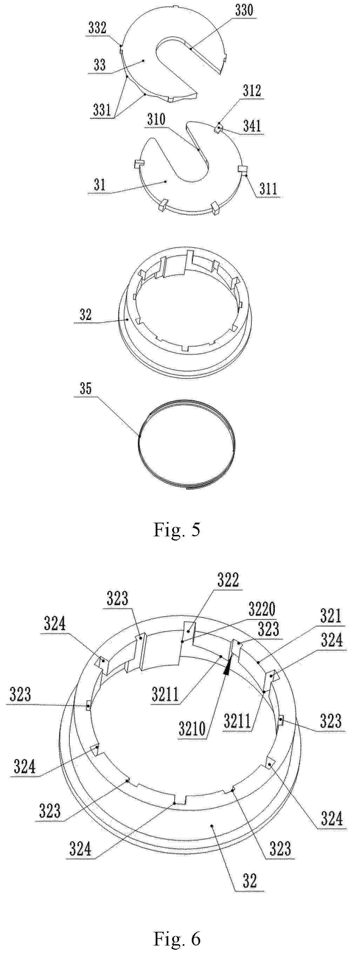

Since the isolation valve needs to undergo a pressure-holding airtightness test, once it enters the second pressure relief state and then returns to the pressure-holding state, it cannot re-enter the second pressure relief state. In conventional fuel tank isolation valves with a switchable power-off pressure relief function, such as that disclosed in Application No. 202410579011.3, after completing the airtightness test, the solenoid valve is powered on to enter the first pressure relief state. Before powering off again, the movable iron core must be manually limited through pushing the lever portion to make the fuel tank isolation valve enter the second pressure relief state, which is cumbersome to operate. To address this, as shown in Fig. 6, in this embodiment, a mounting groove 324 is provided on the protruding flange 321. The mounting groove 324 extends axially outward through the protruding flange 321 and is adapted to the locking protrusion 311.

In the unidirectional rotation direction of the limiting seat 31, the mounting groove 324 is provided on the side of the protruding flange 321 away from the first sliding groove 322.

The mounting groove 324 is configured to accommodate the locking protrusion 311 into the sliding seat 32 when the limiting seat 31 is axially mounted. In this embodiment, the vertical tooth surface of the inclined teeth 3211 corresponds to the side wall of the mounting groove 324.

The mounting groove 324 is provided to facilitate the insertion of the limiting seat 31 into the sliding seat 32 when the solenoid valve 2 is powered off. As shown in Fig. 9, in the initial state, the locking protrusion 311 is positioned within the mounting groove 324. At this time, the limiting seat 31 and the sliding seat 32 are axially unlocked, and the fuel tank isolation valve is in the pressure-holding state. After the solenoid valve 2 is powered on, the limiting seat 31 is pushed until the locking protrusion 311 moves axially inward out of the mounting groove 324. Due to the action of the conversion device, after the locking protrusion 311 exits the mounting groove 324, the limiting seat 31 rotates in the circumferential direction, causing the locking protrusion 311 to be offset from the mounting groove 324. After the solenoid valve 2 is powered off the next time, as shown in Fig. 10, the locking protrusion 311 cannot enter the mounting groove 324, and at this time, the isolation valve is in the second pressure relief state. Therefore, the fuel tank isolation valve in this embodiment can automatically enter the second pressure relief state after completing a airtightness test in the pressure-holding state merely through controlling the power-on and power-off of the solenoid valve 2, which has the advantages of simple operation and a high degree of automation.

### Embodiment 3

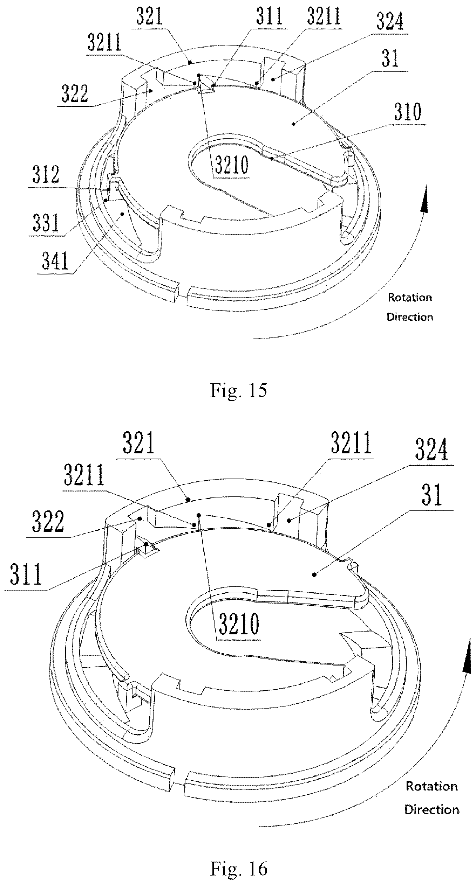

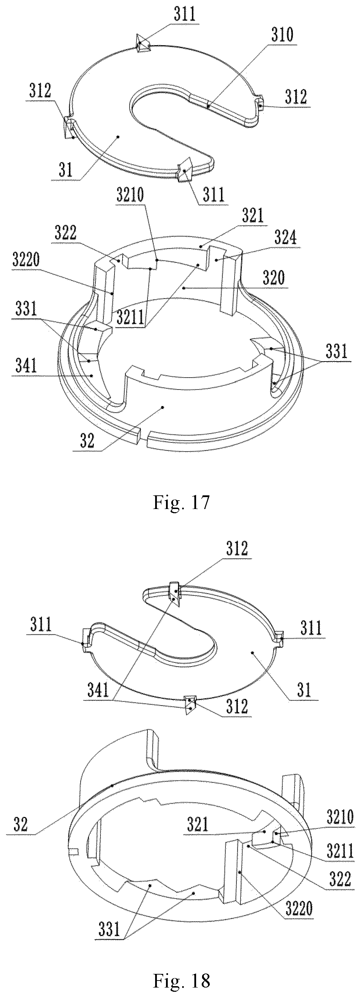

As shown in Figs. 12 to 18, and based on Embodiment 1, the fuel tank isolation valve further comprises:
a temporary power-off pressure relief device 3, which comprises a limiting seat 31, a sliding seat 32 and a conversion device, the sliding seat 32 is arranged at the front end of a valve body of the solenoid valve 2, and the limiting seat 31 is arranged on the movable iron core 21;
the fuel tank isolation valve has a second pressure relief state, in which the solenoid valve 2 is powered off and the first spring 22 pushes the movable iron core 21 forward until the limiting seat 31 and the sliding seat 32 axially contact each other so as to limit the plug 211 from blocking the through hole 1011; correspondingly, the limiting seat 31 and the sliding seat 32 are respectively provided with a locking protrusion 311 and a protruding flange 321 that are axially opposite to each other;
the conversion device is configured to convert an axial driving force of the movable iron core 21 acting on the limiting seat 31 into a circumferential unidirectional rotation of the limiting seat 31 (the process of unidirectional rotation is shown in Figs. 15 to 16); a first sliding groove 322 is provided on one side of the protruding flange 321 for accommodating axial sliding of the locking protrusion 311; and
the fuel tank isolation valve further comprises a rotation blocking structure, which is configured to restrict the limiting seat 31 from continuing rotating in the circumferential direction after the locking protrusion 311 rotates into the first sliding groove 322. As shown in Fig. 16 and Fig. 17, in this embodiment, corresponding to the rotation blocking structure, a side wall 3220 is provided on the first sliding groove 322 to restrict the limiting seat 31 from continuing rotating in the circumferential direction. Specifically, the side wall 3220 extends from the protruding flange 321 in the direction away from the plug 211.

A side wall 3220 is provided on the first sliding groove 322 to restrict the limiting seat 31 from continuing rotating in the circumferential direction. Specifically, the side wall 3220 extends from the protruding flange 321 in the direction away from the plug 211.

Specifically, in this embodiment, after the fuel tank isolation valve is in the second pressure relief state, the solenoid valve 2 is powered on and off for one cycle, causing the locking protrusion 311 to enter the first sliding groove 322.

In this embodiment, the conversion device comprises a circumferentially locked driving portion. The driving portion is arranged on one axial side of the limiting seat 31, and a driving tooth 331 is provided on the side of the driving portion adjacent to the limiting seat 31. Opposite the driving tooth 331, a transmission tooth 312 is provided on the limiting seat 31, and a guiding inclined surface 341 is provided between the driving tooth 331 and the transmission tooth 312. After the solenoid valve 2 is powered on, the movable iron core 21 axially presses the limiting seat 31 and the driving portion until the driving tooth 331 is axially pressed against the transmission tooth 312. At this time, the guiding inclined surface 341 is configured to drive the transmission tooth 312 to rotate in the circumferential direction. Through the wedge-shaped engagement between the driving tooth 331 and the transmission tooth 312, the axial force output by the movable iron core 21 can be converted into a rotational driving force.

Different from Embodiment 2, in this embodiment, the transmission tooth 312 and the locking protrusion 311 are arranged at circumferential intervals. Based on this structure, in other embodiments, a blocking wall having the same principle as the side wall 3220 can be provided corresponding to the transmission tooth 312 as the rotation blocking structure.

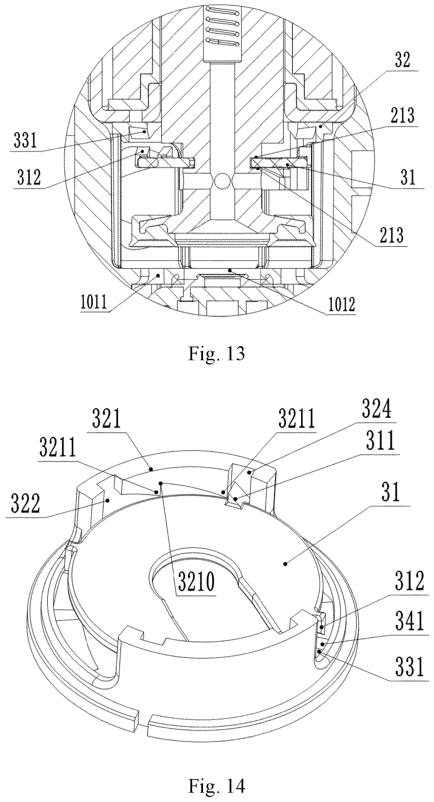

In this embodiment, the limiting seat 31 is in the form of a plate body and is sleeved on the movable iron core 21. As shown in Fig. 13, a limiting boss 213 for driving the limiting seat 31 to move axially is provided on the movable iron core 21 corresponding to the limiting seat 31. The separately manufactured limiting seat 31 is advantageous for reducing manufacturing difficulty. In other embodiments, the limiting seat 31 can be fixed on the movable iron core 21, and the movable iron core 21 is rotatably arranged within the solenoid valve 2.

In this embodiment, a first mounting groove 310 is provided on the limiting seat 31, the first mounting groove 310 extending radially from the central hole of the limiting seat 31 corresponding to the movable iron core 21 to the outer edge of the limiting seat 31. The sliding seat 32 is provided with a receiving cavity 320 for accommodating the rotation of the limiting seat 31 inside, and the receiving cavity 320 is configured to restrict radial movement of the limiting seat 31.

As shown in Figs. 13 to 18, the driving portion in this embodiment is fixedly arranged on the side of the limiting seat 31 away from the plug 211. After the solenoid valve 2 is powered on, the movable iron core 21 axially pushes the limiting seat 31 until the transmission tooth 312 is axially pressed against the driving tooth 331, thereby driving the transmission tooth 312 to rotate in the circumferential direction. Based on the above structure, the driving portion can be integrated into the front end of the valve body of the solenoid valve 2 or the bottom of the sliding seat 32, which, compared with Embodiment 2, eliminates the need to manufacture the pressure plate 33 and thereby saving production costs. In the present embodiment, the driving portion is integrally arranged at the bottom of the sliding seat 32. In the present embodiment, the locking protrusion 311 is provided in a pair, and the transmission tooth 312 is provided in a pair.

In this embodiment, at least one pair of inclined teeth 3211 is provided on the protruding flange 321 at the side adjacent to the locking protrusion 311, and a positioning slot 3210 is provided between adjacent inclined teeth 3211. When the fuel tank isolation valve is in the second pressure relief state, the locking protrusion 311 resists on the positioning slot 3210.

In the unidirectional rotation direction of the limiting seat 31, the tooth surface of the inclined teeth 3211 adjacent to the first sliding groove 322 is inclined along the circumferential direction, and the tooth surface of the inclined teeth 3211 away from the first sliding groove 322 is perpendicular to the circumferential direction. When the solenoid valve 2 is powered off, the movable iron core 21 moves toward the partition 101 under the force of the first spring 22, and the inclined teeth 3211 and the positioning slot 3210 are configured to restrict the limiting seat 31 from rotating in the reverse direction during this process. Specifically, an inclined surface corresponding to the inclined tooth surface of the inclined tooth 3211 is provided on the locking protrusion 311. In this embodiment, the inclined tooth surface of the inclined teeth 3211 on the side adjacent to the first sliding groove 322 extends into the first sliding groove 322.

In this embodiment, a mounting groove 324 is provided on the protruding flange 321. The mounting groove 324 extends axially outward through the protruding flange 321 and is adapted to the locking protrusion 311. In the unidirectional rotation direction of the limiting seat 31, the mounting groove 324 is provided on the side of the protruding flange 321 away from the first sliding groove 322. The mounting groove 324 is configured to accommodate the locking protrusion 311 into the sliding seat 32 when the limiting seat 31 is axially mounted. In this embodiment, the vertical tooth surface of the inclined teeth 3211 corresponds to the side wall of the mounting groove 324.

The mounting groove 324 is provided to facilitate the insertion of the limiting seat 31 into the sliding seat 32 when the solenoid valve 2 is powered off. As shown in Fig. 14, in the initial state, the locking protrusion 311 is positioned within the mounting groove 324. At this time, the limiting seat 31 and the sliding seat 32 are axially unlocked, and the fuel tank isolation valve is in the pressure-holding state. When the solenoid valve 2 is powered on, the limiting seat 31 is pushed so that the locking protrusion 311 moves axially inward out of the mounting groove 324. Due to the action of the conversion device, after the locking protrusion 311 exits the mounting groove 324, the limiting seat 31 rotates in the circumferential direction, causing the locking protrusion 311 to be offset from the mounting groove 324. When the solenoid valve 2 is powered off the next time, as shown in Fig. 15, the locking protrusion 311 cannot enter the mounting groove 324, and at this time, the isolation valve is in the second pressure relief state. Therefore, the fuel tank isolation valve in this embodiment can automatically enter the second pressure relief state after completing a airtightness test in the pressure-holding state merely through controlling the power-on and power-off of the solenoid valve 2, which has the advantages of simple operation and a high degree of automation.

The above descriptions, in combination with specific embodiments, illustrate the technical principles of the present invention. These descriptions are intended only to explain the principles of the invention and shall not be construed in any way as limiting the protection scope of the present invention. Based on this explanation, those skilled in the art can conceive of other specific embodiments of the present invention without exercising inventive effort, and such embodiments shall fall within the protection scope of the present invention.

## Claims

1. A fuel tank isolation valve, comprising:
an isolation valve main body (1), which is provided with a valve cavity (10) inside, a partition (101) is arranged in the valve cavity (10), and a through hole (1011) is provided on the partition (101) for communicating flow passages on both sides of the partition (101);
a solenoid valve (2), which is mounted on the isolation valve main body (1), the solenoid valve (2) comprises a movable iron core (21) extending into the valve cavity (10), a plug (211) is provided at a front end of the movable iron core (21), the plug (211) is directly opposite to the partition (101), and a first spring (22) is in contact with a side of the movable iron core (21) away from the partition (101);
the fuel tank isolation valve has a pressure-holding state, in which the solenoid valve (2) is powered off and the first spring (22) pushes the movable iron core (21) forward until the plug (211) blocks the through hole (1011);
the fuel tank isolation valve has a first pressure relief state, in which the solenoid valve (2) is powered on and the movable iron core (21) retracts in a direction away from the partition (101) until the through hole (1011) is opened;
**characterized in that** the fuel tank isolation valve further comprises:
a temporary power-off pressure relief device (3), which comprises a limiting seat (31), a sliding seat (32) and a conversion device, the sliding seat (32) is arranged at the front end of a valve body of the solenoid valve (2), and the limiting seat (31) is arranged on the movable iron core (21);
the fuel tank isolation valve has a second pressure relief state, in which the solenoid valve (2) is powered off and the first spring (22) pushes the movable iron core (21) forward until the limiting seat (31) and the sliding seat (32) axially contact each other so as to limit the plug (211) from blocking the through hole (1011); correspondingly, the limiting seat (31) and the sliding seat (32) are respectively provided with a locking protrusion (311) and a protruding flange (321) that are axially opposite to each other;
the conversion device is configured to convert an axial driving force of the movable iron core (21) acting on the limiting seat (31) into a circumferential unidirectional rotation of the limiting seat (31);
a first sliding groove (322) is provided on one side of the protruding flange (321) for accommodating axial sliding of the locking protrusion (311); and
the fuel tank isolation valve further comprises a rotation blocking structure, which is configured to restrict the limiting seat (31) from continuing rotating in the circumferential direction after the locking protrusion (311) rotates into the first sliding groove (322).

2. The fuel tank isolation valve according to claim 1, wherein the conversion device comprises a circumferentially locked driving portion, the driving portion is arranged on one axial side of the limiting seat (31), a driving tooth (331) is provided on the side of the driving portion adjacent to the limiting seat (31), a transmission tooth (312) is provided on the limit seating (31) opposite to the driving tooth (331), and a guiding inclined surface (341) is provided between the driving tooth (331) and the transmission tooth (312); and
after the solenoid valve (2) is powered on, the movable iron core (21) axially presses the limiting seat (31) and the driving portion until the driving tooth (331) is axially pressed against the transmission tooth (312), and at this time, the guiding inclined surface (341) is configured to drive the transmission tooth (312) to rotate in the circumferential direction.

3. The fuel tank isolation valve according to claim 2, wherein the driving portion is a pressure plate (33), the pressure plate (33) is arranged on the side of the limiting seat (31) adjacent to the plug (211), the pressure plate (33) is arranged on the movable iron core (21), the driving tooth (331) is arranged on the pressure plate (33), the transmission tooth (312) is provided on the limiting seat (31) opposite to the driving tooth (331), the limiting seat (31) is slidably sleeved on the movable iron core (21), and a limiting supporting portion is provided on the side of the limiting seat (31) away from the plug (211); and
after the solenoid valve (2) is powered on, the movable iron core (21) axially pushes the pressure plate (33) until the driving tooth (331) is axially pressed against the transmission tooth (312), thereby driving the transmission tooth (312) to rotate in the circumferential direction, and at this time, the limiting supporting portion is configured to support the limiting seat (31).

4. The fuel tank isolation valve according to claim 3, wherein a circumferential locking structure is provided between the pressure plate (33) and the sliding seat (32), the circumferential locking structure comprises a positioning protrusion (332) extending on an outer side of the pressure plate (33) and a second sliding groove (323) arranged on an inner side of the sliding seat (32) and extending axially, and the positioning protrusion (332) is slidably arranged within the second sliding groove (323).

5. The fuel tank isolation valve according to claim 4, wherein the pressure plate (33) is slidably sleeved on the movable iron core (21), and the movable iron core (21) is provided with a pressing surface (212) corresponding to an upper end of the pressure plate (33).

6. The fuel tank isolation valve according to claim 2, wherein the driving portion is fixedly arranged on the side of the limiting seat (31) away from the plug (211); and after the solenoid valve (2) is powered on, the movable iron core (21) axially pushes the limiting seat (31) until the transmission tooth (312) is axially pressed against the driving tooth (331), thereby driving the transmission tooth (312) to rotate in the circumferential direction.

7. The fuel tank isolation valve according to claim 1, wherein the limiting seat (31) is in the form of a plate body and is sleeved on the movable iron core (21), and a limiting boss (213) for driving the limiting seat (31) to move axially is provided on the movable iron core (21) corresponding to the limiting seat (31).

8. The fuel tank isolation valve according to claim 7, wherein a first mounting groove (310) is provided on the limiting seat (31), the first mounting groove (310) extending radially from a central hole of the limiting seat (31) corresponding to the movable iron core (21) to an outer edge of the limiting seat (31), the sliding seat (32) is provided with a receiving cavity (320) for accommodating rotation of the limiting seat (31) inside, and the receiving cavity (320) is configured to restrict radial movement of the limiting seat (31).

9. The fuel tank isolation valve according to claim 1, wherein at least one pair of inclined teeth (3211) is provided on the protruding flange (321) at the side adjacent to the locking protrusion (311), a positioning slot (3210) is provided between adjacent inclined teeth (3211), and when the fuel tank isolation valve is in the second pressure relief state, the locking protrusion (311) resists on the positioning slot (3210); and
in an unidirectional rotation direction of the limiting seat (31), a tooth surface of the inclined teeth (3211) adjacent to the first sliding groove (322) is inclined along the circumferential direction, and the tooth surface of the inclined teeth (3211) away from the first sliding groove (322) is perpendicular to the circumferential direction.

10. The fuel tank isolation valve according to claim 1, wherein a mounting groove (324) is provided on the protruding flange (321), the mounting groove (324) extends axially outward through the protruding flange (321), and the mounting groove (324) is adapted to the locking protrusion (311); and
in the unidirectional rotation direction of the limiting seat (31), the mounting groove (324) is arranged on the side of the protruding flange (321) away from the first sliding groove (322).

11. The fuel tank isolation valve according to claim 1, wherein the rotation blocking structure is a side wall (3220) of the first sliding groove (322).
